# EUROPEAN PATENT APPLICATION

(11) **EP 4 040 832 A1**
(43) Date of publication of application: **10.08.2022**
(21) Application number: 19947758.9
(22) Date of filing: 04.10.2019
(51) Int. Cl.: H04W 16/28, H04W 72/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/039409
(87) International publication number: WO 2021/065015

(57) **Abstract**

A terminal according to an embodiment of the present disclosure includes a receiving section configured to receive one medium access control control element (MAC CE), and a control section configured to update a transmission configuration indication state (TCI state) for all active bandwidth parts (BWPs) in a same band or a same cell group by the one MAC CE, in which the control section expects that reference signals of a quasi-co-location (QCL) type D configured for a same TCI state identifier (ID) of all active BWPs within each band or each cell group have a QCL type D relationship with each other, if applicable. According to one aspect of the present disclosure, it is possible to inhibit increase in overhead related to update of a TCI state.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

In Rel-15 NR, a terminal (user terminal, user equipment (UE)) receives information for selecting one of the configured transmission configuration indication states (TCI states) and determines the TCI state to be applied to a predetermined channel/signal on the basis of the information.

For example, in the Rel-15 NR, it is necessary to activate (or indicate) the TCI state by using one MAC CE for each pair of a cell and a bandwidth part (BWP). Thus, when the number of cells, the number of BWPs, and the like, configured for the UE are large, communication overhead for signaling the TCI state becomes a problem. In other words, according to the NR specifications so far, there is a possibility that increase in communication throughput is inhibited.

Thus, in Rel. 16 NR, it is considered to activate one set of PDSCH TCI states for a plurality of CC/BWPs using one MAC CE. This activation may be referred to as simultaneous update of multiple TCI states using one MAC CE (in the present disclosure, hereinafter, also simply referred to as "simultaneous update").

The requirement for simultaneous update that has been studied so far has a strict constraint that the RSs (CSI-RS/TRS/SSB) configured in the QCL-D RS are the same in all BWPs/CCs, and thus, for example, when the TRS is configured as the QCL-D RS, this requirement cannot be satisfied.

If a requirement that allows simultaneous update to be appropriately implemented is not specified, the overhead for the MAC CE may inhibit increase of communication throughput.

Thus, an object of the present disclosure is to provide a terminal and a radio communication method capable of inhibiting increase in overhead related to update of a TCI state.

### Solution to Problem

A terminal according to an embodiment of the present disclosure includes a receiving section configured to receive one medium access control control element (MAC CE), and a control section configured to update a transmission configuration indication state (TCI state) for all active bandwidth parts (BWPs) in a same band or a same cell group by the one MAC CE, in which the control section expects that reference signals of a quasi-co-location (QCL) type D configured for a same TCI state identifier (ID) of all active BWPs within each band or each cell group have a QCL type D relationship with each other, if applicable.

### Advantageous Effects of Invention

According to one aspect of the present disclosure, it is possible to inhibit increase in overhead related to update of a TCI state.

### Brief Description of Drawings

Fig. 1 is a diagram illustrating an example of an assumption of UE in a case where simultaneous update is applied.
Fig. 2 is a diagram illustrating an example of a case where a QCL source of a QCL type D in a TCI state for a PDSCH that is allowed in Rel. 15 NR is a TRS.
Fig. 3 is a diagram illustrating an example of a case where a QCL source of a QCL type D in a TCI state for a PDSCH that is not allowed in Rel. 15 NR is a TRS.
Fig. 4 is a diagram illustrating an example of an assumption of UE in a case where simultaneous update is applied even if a TRS is configured as a RS of a QCL type D in a TCI state of a PDSCH.
Fig. 5 illustrates one example of a schematic configuration of a radio communication system according to one embodiment.
Fig. 6 illustrates one example of the configuration of a base station according to one embodiment.
Fig. 7 illustrates one example of the configuration of a user terminal according to one embodiment.
Fig. 8 illustrates one example of the hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) based on a transmission configuration indication state (TCI state).

The TCI state may represent what is applied to a downlink signal/channel. One corresponding to the TCI state applied to an uplink signal/channel may be expressed as a spatial relation.

The TCI state is information regarding quasi-co-location (QCL) of the signal / channel, and may be referred to as, for example, a spatial reception parameter and spatial relation information (SRI). The TCI state may be configured in the UE for each channel or each signal.

The QCL is an indicator indicating a statistical property of a signal/channel. For example, when one signal/channel and another signal/channel have a QCL relation, this may mean that it is possible to assume that the plurality of different signals/channels have at least one identical property out of Doppler shift, Doppler spread, average delay, delay spread, or spatial parameter (for example, spatial Rx parameter) (a QCL relation is established regarding at least one of these).

Note that, the spatial Rx parameter may correspond to a reception beam of the UE (for example, a reception analog beam), and the beam may be specified on the basis of spatial QCL. The QCL (or at least one element of the QCL) in the present disclosure may be replaced with the spatial QCL (sQCL).

A plurality of types of QCL (QCL types) may be defined. For example, four QCL types A to D with different parameters (or parameter sets) may be provided that can be assumed to be identical, and these parameters are indicated below:
- QCL type A (QCL-A): Doppler shift, Doppler spread, average delay, and delay spread;
- QCL Type B (QCL-B): Doppler shift and Doppler spread;
- QCL type C (QCL-C): Doppler shift and average delay; and
- QCL type D (QCL-D): Spatial Rx parameter.

It may be referred to as a QCL assumption for the UE to assume that a predetermined control resource set (CORESET), channel, or reference signal has a specific QCL (for example, QCL type D) relation with another CORESET, channel, or reference signal.

UE may determine, based on a TCI-state of a signal/channel or QCL assumption, at least one of a transmission beam (Tx beam) and a reception beam (Rx beam) of the signal/channel.

The TCI state may be, for example, information regarding QCL between a target channel (in other words, a reference signal (RS) for the channel) and another signal (for example, another reference signal (RS)). The TCI state may be configured

(instructed) by higher layer signaling, physical layer signaling, or a combination thereof.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

A channel for which a TCI state or spatial relation is configured (specified) may be, for example, at least one of a Physical Downlink Shared Channel (PDSCH), a Physical Downlink Control Channel (PDCCH), a Physical Uplink Shared Channel (PUSCH), and a Physical Uplink Control Channel (PUCCH).

Furthermore, an RS having a QCL relation with the channel may be, for example, at least one of a Synchronization Signal Block (SSB), a Channel State Information Reference Signal (CSI-RS)), a measurement reference signal (Sounding Reference Signal (SRS)), a tracking CSI-RS (also referred to as a Tracking Reference Signal (TRS)), a QCL detection reference signal (also referred to as a QRS), or the like.

The SSB is a signal block including at least one of a primary synchronization signal (PSS), a secondary synchronization signal (SSS), and a physical broadcast channel (PBCH). The SSB may be referred to as an SS/PBCH block.

An information element of the TCI state configured by higher layer signaling ("TCI-state IE" of RRC) may include one or a plurality of pieces of QCL information ("QCL-Info"). The QCL information may include at least one of information regarding the RS having a QCL relation (RS related information) and information indicating a QCL type (QCL type information). The RS related information may include information such as an index of the RS (for example, an SSB index or a non-zero-power (NZP) CSI-RS resource identifier (ID)), an index of a cell where the RS is located, or an index of a bandwidth part (BWP) where the RS is located.

In Rel. 15 NR, both an RS of the QCL type A and an RS of the QCL type D, or only the RS of the QCL type A may be configured for the UE as a TCI state of at least one of the PDCCH or the PDSCH.

In a case where a TRS is configured as the RS of the QCL type A, the TRS is different from a DMRS of the PDCCH or the PDSCH, and it is assumed that the same TRS is periodically transmitted for a long time. The UE can measure the TRS and calculate an average delay, a delay spread, and the like.

In the UE for which the TRS is configured as the RS of the QCL type A in the TCI state of the DMRS of the PDCCH or the PDSCH, it can be assumed that parameters (the average delay, the delay spread, and the like) of the QCL type A are the same between the DMRS of the PDCCH or the PDSCH and the TRS, and thus, the parameters (the average delay, the delay spread, and the like) of the type A of the DMRS of the PDCCH or the PDSCH can be obtained from a measurement result of the TRS. When performing channel estimation of at least one of the PDCCH or the PDSCH, the UE can perform channel estimation with higher accuracy using the measurement result of the TRS.

The UE for which the RS of the QCL type D is configured can determine a UE reception beam (spatial domain reception filter, UE spatial domain reception filter) by using the RS of the QCL type D.

An RS of QCL type X in a TCI state may mean an RS in a QCL type X relation with (DMRS of) a certain channel/signal, and this RS may be referred to as a QCL source of QCL type X in the TCI state.

### <TCI state for PDCCH>

Information regarding QCL between a PDCCH (or a demodulation reference signal (DMRS) antenna port related to the PDCCH) and a predetermined RS may be referred to as a TCI state for the PDCCH.

The UE may determine a TCI state for a UE-specific PDCCH (CORESET) on the basis of higher layer signaling. For example, for the UE, one or a plurality of (K) TCI states may be configured by RRC signaling for each CORESET.

In the UE, one of the plurality of TCI states configured by the RRC signaling may be activated by a MAC CE, for each CORESET. The MAC CE may be referred to as a TCI state indication for UE-specific PDCCH MAC CE. The UE may monitor a CORESET on the basis of an active TCI state corresponding to the CORESET.

### <TCI state for PDSCH>

Information regarding QCL between a PDSCH (or a DMRS antenna port related to the PDSCH) and a predetermined RS may be referred to as a TCI state for the PDSCH.

The UE may notify (configure) M (M ≥ 1) TCI states for PDSCH (QCL information for M PDSCHs) by higher layer signaling. Note that the number M of TCI states configured in the UE may be limited by at least one of the UE capability and the QCL type.

DCI used for PDSCH scheduling may include a predetermined field (which may be referred to as, for example, a TCI field, a TCI state field, or the like) indicating a TCI state for the PDSCH. The DCI may be used for PDSCH scheduling of one cell, and may be referred to as, for example, DL DCI, DL assignment, DCI format 1_0, DCI format 1_1, or the like.

Whether or not the TCI field is included in the DCI may be controlled by information of which the UE is notified from the base station. The information may be information (for example, TCI presence information, in-DCI TCI presence information, a higher layer parameter TCI-PresentInDCI) indicating whether the TCI field is present or absent in the DCI. The information may be configured in the UE by, for example, higher layer signaling.

When more than eight types of TCI states are configured in the UE, MAC CE may be used to activate (or specify) eight or less types of TCI states. The MAC CE may be referred to as a TCI states activation/deactivation for UE-specific PDSCH MAC CE. A value of the TCI field in the DCI may indicate one of the TCI states activated by MAC CE.

In a case where the TCI presence information configured as "enabled" is configured in the UE for a CORESET for scheduling a PDSCH (CORESET used for PDCCH transmission for scheduling the PDSCH), the UE may assume that the TCI field is present in the DCI format 1_1 of the PDCCH transmitted on the CORESET.

In a case where the TCI presence information is not configured for the CORESET for scheduling a PDSCH, or the PDSCH is scheduled by the DCI format 1_0, in a case where a time offset between reception of DL DCI (DCI for scheduling the PDSCH) and reception of a PDSCH corresponding to the DCI is greater than or equal to a threshold value, the UE, to determine QCL of a PDSCH antenna port, may assume that a TCI state or a QCL assumption for the PDSCH is the same as a TCI state or a QCL assumption applied to a CORESET used for PDCCH transmission for scheduling the PDSCH.

Note that the CORESET-ID may be an ID (ID for identifying CORESET) configured by the RRC information element "ControlResourceSet".

### <Spatial relation for PUCCH>

In the UE, a parameter (PUCCH configuration information, PUCCH-Config) used for PUCCH transmission may be configured by higher layer signaling (for example, Radio Resource Control (RRC) signaling). The PUCCH configuration information may be configured for each partial band (for example, an uplink Bandwidth Part (BWP)) in a carrier (also referred to as a cell and a Component Carrier (CC)).

The PUCCH configuration information may include a list of PUCCH resource set information (for example, PUCCH-ResourceSet) and a list of PUCCH spatial relation information (for example, PUCCH-SpatialRelationInfo).

The PUCCH resource set information may include a list (for example, resourceList) of a PUCCH resource index (ID, for example, PUCCH-ResourceId).

Furthermore, when the UE does not have a dedicated PUCCH resource configuration information (for example, a dedicated PUCCH resource configuration) provided by the PUCCH resource set information in the PUCCH configuration information (before RRC setup), the UE may determine a PUCCH resource set on the basis of a parameter (for example, pucch-ResourceCommon) in the system information (for example, System Information Block Type 1 (SIB1) or Remaining Minimum System Information (RMSI)). The PUCCH resource set may include 16 PUCCH resources.

On the other hand, when the UE has the dedicated PUCCH resource configuration information (UE-dedicated uplink control channel configuration, dedicated PUCCH resource configuration) (after RRC setup), the UE may determine the PUCCH resource set according to the number of UCI information bits.

The UE may determine one PUCCH resource (index) in the PUCCH resource set (for example, a cell-specific PUCCH resource set or a PUCCH resource set determined for individual UE) based on at least one of a value of a predetermined field (for example, a PUCCH resource indicator field) in Downlink Control Information (DCI) (for example, the DCI format 1_0 or 1_1 used for PDSCH scheduling), the number of CCEs (N_{CCE}) in a control resource set (control resource set (CORESET)) for reception of a PDCCH that carries the DCI, or an index (n_{CCE,0}) of a head (first) CCE of the reception of the PDCCH.

The PUCCH spatial relation information (for example, the RRC information element "PUCCH-spatialRelationInfo") may indicate a plurality of candidate beams (spatial domain filters) for PUCCH transmission. The PUCCH spatial relation information may indicate a spatial relation between a reference signal (RS) and a PUCCH.

In the present disclosure, the index, the ID, the indicator, the resource ID, and the like may be replaced with each other.

The list of the PUCCH spatial relation information may include several elements (PUCCH spatial relation information Information Element (IE)). Each piece of the PUCCH spatial relation information may include, for example, at least one of an index (ID, for example, pucch-SpatialRelationInfoId) of the PUCCH spatial relation information, an index (ID, for example, servingCellId) of the serving cell, and information related to the RS (reference RS) that has a spatial relation with the PUCCH.

For example, the information regarding the RS may be an SSB index, a CSI-RS index (for example, an NZP-CSI-RS resource configuration ID), or an SRS resource ID and an ID of the BWP. The SSB index, the CSI-RS index, and the SRS resource ID may be associated with at least one of a beam, a resource, and a port selected by measurement of a corresponding RS.

When more than one piece of the SRI regarding the PUCCH is configured, the UE may perform control so that one piece of the PUCCH SRI is active with respect to one PUCCH resource at a given time, on the basis of a PUCCH spatial relation Activation/Deactivation MAC CE.

The PUCCH spatial relation Activation/Deactivation MAC CE of Rel-15 NR is expressed by a total of three Octets (8 bits × 3 = 24 bits) of Octets (Octs) 1-3.

The MAC CE may include information such as an application target serving cell ID ("Serving Cell ID" field), a BWP ID ("BWP ID" field), and a PUCCH resource ID ("PUCCH Resource ID" field).

Furthermore, the MAC CE includes a field of "Sᵢ" (i = 0-7). When a certain field of Si indicates 1, the UE may activate the SRI of the SRI ID #i. When a certain field of Sᵢ indicates 0, the UE may deactivate the SRI of the SRI ID #i.

### <Spatial relation for SRS and PUSCH>

The UE may receive information (SRS configuration information, for example, a parameter in the RRC control element "SRS-Config") used for transmission of a measurement reference signal (for example, a sounding reference signal (SRS)).

Specifically, the UE may receive at least one of information related to one or a plurality of SRS resource sets (SRS resource set information, for example, the RRC control element "SRS-ResourceSet") and information related to one or a plurality of SRS resources (SRS resource information, for example, the RRC control element "SRS-Resource").

One SRS resource set may be associated with a predetermined number of SRS resources (a predetermined number of SRS resources may be grouped). Each SRS resource may be specified by an SRS Resource Indicator (SRI) or an SRS resource Identifier (ID).

The SRS resource set information may include information of an SRS resource set ID (SRS-ResourceSetId), a list of SRS resource IDs (SRS-ResourceId) used in the resource set, an SRS resource type (for example, one of periodic SRS, semi-persistent SRS, and aperiodic CSI (Aperiodic SRS)), and SRS usage.

Here, the SRS resource type may indicate any one of a periodic SRS (P-SRS), a semi-persistent SRS (SP-SRS), and an aperiodic CSI (A-SRS). Note that the UE may transmit a P-SRS and an SP-SRS periodically (or periodically after activated), and transmit an A-SRS based on an SRS request in the DCI.

Further, the usage (the RRC parameter "usage" or the Layer-1 (L1) parameter "SRS-SetUse") may be, for example, beam management, codebook (CB), noncodebook (NCB), antenna switching, or the like. SRS used for the codebook or the non-codebook may be used to determine a precoder for codebook-based or non-codebook-based PUSCH transmission based on SRI.

For example, in the case of codebook based transmission, the UE may determine the precoder for PUSCH transmission based on SRI, transmitted rank indicator (TRI) and transmitted precoding matrix indicator (TPMI). For the non-codebook based transmission, the UE may determine a precoder for PUSCH transmission based on the SRI.

The SRS resource information may include an SRS resource ID (SRS-ResourceId), the number of SRS ports, an SRS port number, transmission Comb, SRS resource mapping (for example, time and/or frequency resource position, resource offset, resource periodicity, the number of repetitions, the number of SRS symbols, and SRS bandwidth), hopping related information, an SRS resource type, a sequence ID, and SRS spatial relation information.

The SRS spatial relation information (for example, the RRC information element "spatialRelationInfo") may indicate spatial relation information between a predetermined reference signal and the SRS. The predetermined reference signal may be at least one of a Synchronization Signal/Physical Broadcast Channel (SS/PBCH) block, a Channel State Information Reference Signal (CSI-RS), or an SRS (for example, another SRS). The SS/PBCH block may be referred to as a synchronization signal block (SSB).

The SRS spatial relation information may include at least one of an SSB index, a CSI-RS resource ID, and an SRS resource ID as an index of the predetermined reference signal.

Note that, in the present disclosure, an SSB index, an SSB resource ID, and an SSB resource indicator (SSBRI) may be replaced with each other. Furthermore, a CSI-RS index, a CSI-RS resource ID, and a CSI-RS resource indicator (CRI) may be replaced with each other. Further, an SRS index, an SRS resource ID and an SRI may be replaced with each other.

The SRS spatial relation information may include a serving cell index, a BWP index (BWP ID), and the like corresponding to the predetermined reference signal.

In NR, the transmission of the uplink signal may be controlled based on the presence or absence of beam correspondence (BC). The BC may be, for example, a capability of a certain node (for example, a base station or UE) to determine a beam (transmission beam, Tx beam) used for signal transmission based on a beam (reception beam, Rx beam) used for signal reception.

Note that BC may be referred to as transmission/reception beam correspondence (Tx/Rx beam correspondence), beam reciprocity, beam calibration, calibrated/non-calibrated, reciprocity calibrated/non-calibrated, a correspondence degree, a matching degree, or the like.

For example, when there is no BC, the UE may transmit the uplink signal (for example, PUSCH, PUCCH, SRS, and the like) by using the same beam (spatial domain transmission filter) as the SRS (or the SRS resource) indicated from the base station on the basis of measurement results of one or more SRSs (or SRS resources).

On the other hand, when there is BC, the UE may transmit an uplink signal (for example, PUSCH, PUCCH, SRS, and the like) using a beam (spatial domain transmission filter) identical or corresponding to the beam (spatial domain reception filter) used for reception of a predetermined SSB or CSI-RS (or CSI-RS resource).

When spatial relation information regarding the SSB or CSI-RS and the SRS is configured for a certain SRS resource (for example, when there is BC), the UE may transmit the SRS resource by using the same spatial domain filter (spatial domain transmission filter) as a spatial domain filter (spatial domain reception filter) for receiving the SSB or CSI-RS. In this case, the UE may assume that the UE reception beam of the SSB or CSI-RS is the same as the UE Tx beam of the SRS.

For a certain SRS (target SRS) resource, when spatial relation information regarding another SRS (reference SRS) and the SRS (target SRS) is configured (for example, when there is no BC), the UE may transmit the target SRS resource by using the same spatial domain filter (spatial domain transmission filter) as a spatial domain filter (spatial domain transmission filter) for transmitting the reference SRS. That is, in this case, the UE may assume that a UE transmission beam of the reference SRS is the same as a UE Tx beam of the target SRS.

The UE may determine the spatial relation of the PUSCH scheduled by the DCI based on a value of a predetermined field (for example, SRS resource identifier (SRI) field) in the DCI (for example, DCI format 0_1). Specifically, the UE may use the spatial relation information (for example, the RRC information element "spatialRelationInfo") of the SRS resource determined based on the value (for example, SRI) of the predetermined field for the PUSCH transmission.

When the codebook-based transmission is used for the PUSCH, in the UE, two SRS resources may be configured by RRC, and one of the two SRS resources may be indicated by DCI (1-bit predetermined field). When the non-codebook-based transmission is used for the PUSCH, in the UE, four SRS resources may be configured by RRC, and one of the four SRS resources may be indicated by DCI (2-bit predetermined field). In order to use a spatial relation other than the two or four spatial relations configured by the RRC, RRC reconfiguration is required.

Note that, the DL-RS can be configured for the spatial relation of the SRS resource used for the PUSCH. For example, for the SP-SRS, in the UE, a spatial relation of a plurality of (for example, up to 16) SRS resources can be configured by RRC, and one of the plurality of SRS resources can be indicated by the MAC CE.

### <Activation of TCI State>

As described above, for the PDCCH or PDSCH, one or more TCI states are activated or instructed to the UE among the plurality of TCI states configured by the RRC.

Here, the TCI state activation/deactivation MAC CE for a UE-specific PDSCH in the Rel-15 NR includes a serving cell ID field for identifying a serving cell to which the MAC CE is to be applied, and a BWP ID field for indicating a BWP to which the MAC CE is to be applied.

Further, the TCI state indication MAC CE for the UE specific PDCCH in the Rel-15 NR includes a serving cell ID field for identifying a serving cell to which the MAC CE is to be applied, and a CORESET ID field for indicating a CORESET to which the MAC CE is to be applied. One or more CORESETs are configured for each BWP, and thus, the CORESET specified by the MAC CE may correspond to the CORESET included in the active BWP.

Thus, in the Rel-15 NR, it is necessary to activate (or instruct) the TCI state by using one MAC CE for each pair of the cell (in other words, a CC) and the BWP (eventually, the CORESET), and thus, when the number of cells, the number of BWPs, and the like, configured for the UE is large, communication overhead for these MAC CEs becomes a problem.

Thus, in Rel. 16 NR, it is considered to activate one set of PDSCH TCI states for a plurality of CC/BWPs using one MAC CE. This activation may be referred to as simultaneous update of multiple TCI states using one MAC CE (in the present disclosure, hereinafter, also simply referred to as "simultaneous update").

To perform simultaneous update that has been considered so far, the following requirements must be met:
- The Rel. 15 MAC CE is reused to activate the same set of TCI state IDs for all active BWPs in the same band or in the same cell group in Frequency Range 2 (FR2).
- Support for this mode (this simultaneous update processing) may be indicatedby the UE capability.
- To operate in this mode, the UE expects the RSs of the same QCL type D for the same TCI state ID of all the active BWPs within each band or each cell group.
- For an activation MAC CE received in a certain active BWP in a certain band or cell group, the instructed activated TCI state ID is applied to all active BWPs in this band or cell group.

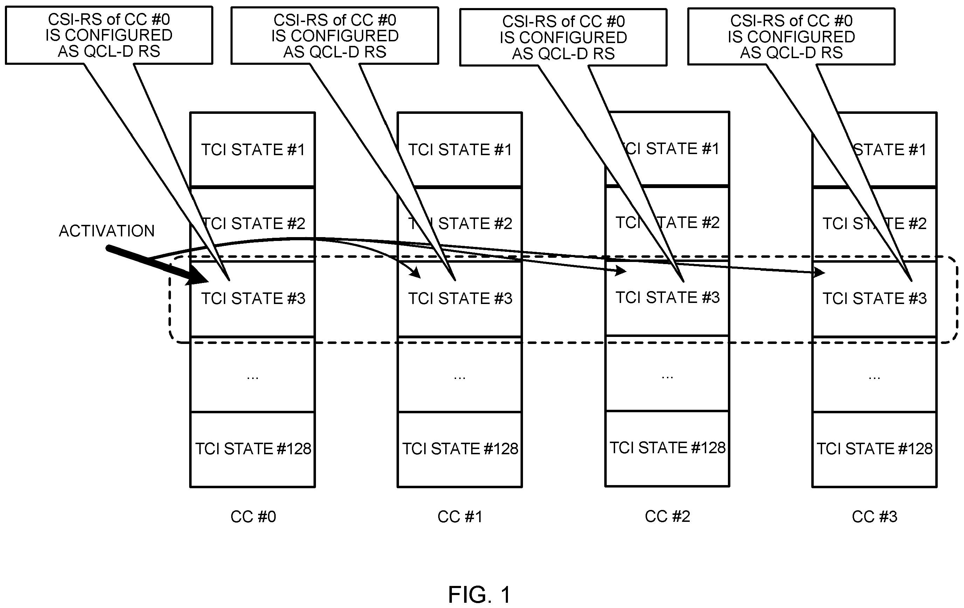

Fig. 1 is a diagram illustrating an example of an assumption of UE in a case where simultaneous update is applied. In this example, four CCs (CCs #0 to #3) included in one cell group are configured in the UE, and 128 TCI states (TCI state #1 (TCI state corresponding to a TCI state ID #1) to #128) are configured as the TCI states of the PDSCH for each CC.

Note that while the TCI state is actually configured for each CC and for each BWP, in this example, the TCI state configured for the active BWP for each CC is illustrated for the sake of simplicity.

As mentioned above, the UE expects the RSs of the same QCL type D for the same TCI state ID of all active BWPs of the same cell group. For example, the UE assumes that the same CSI-RS of CC #0 is configured as the RS of the QCL type D for TCI state #3 of each of CCs #0 to #3.

In Fig. 1, when the UE receives an activation MAC CE for the TCI state #3 of the CC #0, the TCI state #3 of each CC can be activated.

By the way, according to the specification of Rel. 15, regarding the TCI state for the PDSCH, it is defined that the RS of the QCL type D must be the same as the RS of the QCL type A except for a specific case (when the RS of the QCL type D corresponds to a CSI-RS resource in which repetition ("Repetition") is configured).

On the other hand, regarding the TCI state for the PDSCH, it is specified that the TRS is always configured as the RS of the QCL type A for each CC.

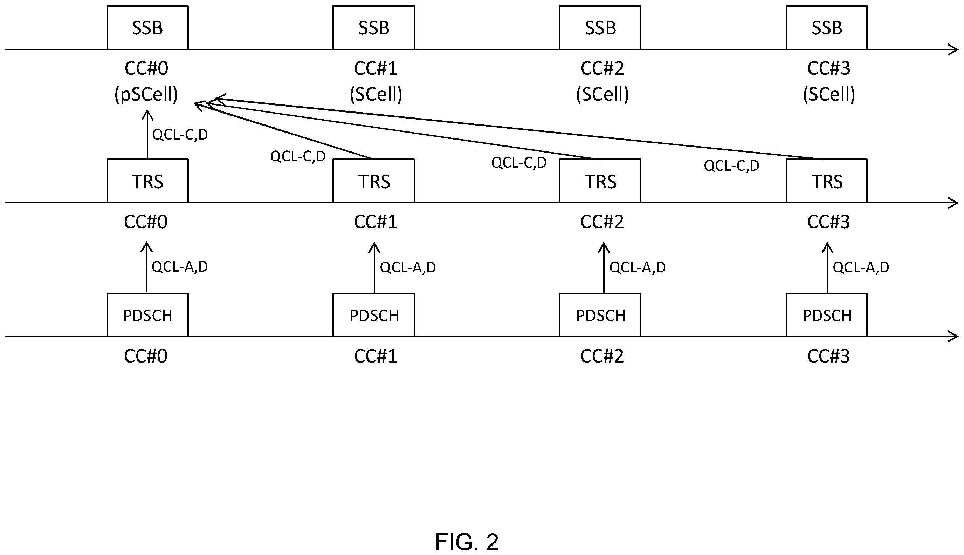

Fig. 2 is a diagram illustrating an example of a case where a QCL source of a QCL type D in a TCI state for a PDSCH that is allowed in Rel. 15 NR is a TRS. It is assumed that Fig. 2 does not correspond to the above specific case.

In Fig. 2, four CCs (CC #0 to CC #3) included in one cell group are configured in the UE. While in this example, the CC #0 is a primary secondary cell (pSCell), and the CC #1 to the CC #3 are configured as secondary cells (SCell), the present disclosure is not limited thereto. For example, the CC #0 may be a primary cell (PCell) or a secondary cell. Any of the CCs #1 to #3 may be a primary cell or a primary secondary cell.

In Fig. 2, a TRS is configured for each CC. In each TRS, the SSB of the CC #0 is configured as the RS of the QCL type C and the RS of the QCL type D.

In Fig. 2, it is assumed that the TRS is used as the QCL source of the TCI state for the PDSCH of each CC. As described above, for the TCI state for the PDSCH, the TRS is always configured as the RS of the QCL Type A for each CC. For example, in Fig. 2, the TCI state of the PDSCH of the CC #0 is configured such that the TRS of the CC #0 is configured as the RS of the QCL type D.

In addition, the RS of the QCL type D needs to be the same as the RS of the QCL type A, and thus, the RS of the QCL type D in the TCI state of the PDSCH of a CC #i (i = 0-3) may be configured as a TRS that is the same as the RS of the QCL type A, for example, as illustrated in Fig. 2.

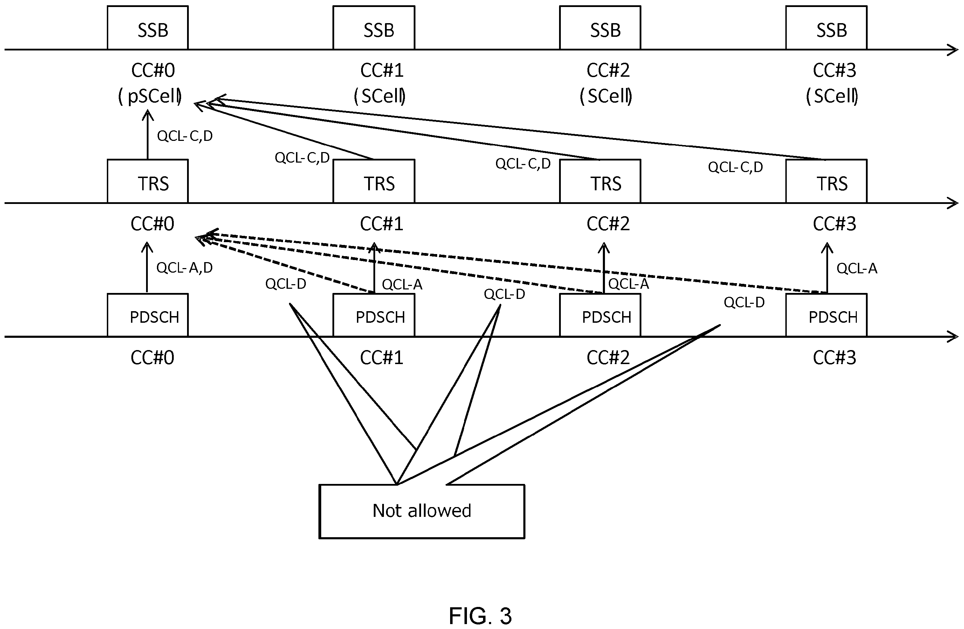

However, when the QCL source of the QCL type D in the TCI state for the PDSCH is a TRS, following the Rel. 15 NR specification, there arises a problem that the above-described simultaneous transmission cannot be applied. Fig. 3 is a diagram illustrating an example of a case where a QCL source of a QCL type D in a TCI state for a PDSCH that is not allowed in Rel. 15 NR is a TRS.

Fig. 3 illustrates an example that is the same as Fig. 2 except for the RS of the QCL type D in the TCI state of the PDSCH, and thus, overlapping description will not be repeated.

In order to apply the simultaneous transmission described above, RSs of the same QCL type D need to be configured for the same TCI state ID for all active BWPs of the same cell group. In other words, as illustrated in Fig. 3, all the RSs of the QCL type D in the TCI state of the PDSCH of the CC #i (i = 0-3) need to be configured as the TRS of the CC #0. However, as described with reference to Fig. 2, such configuration is not allowed.

As described above, the requirement for simultaneous update that has been studied so far has a strict constraint that the RSs (CSI-RS/TRS/SSB) configured in the QCL-D RS are the same in all BWPs/CCs, and thus, for example, when the TRS is configured as the QCL-D RS, this requirement cannot be satisfied.

If a requirement that allows simultaneous update to be appropriately implemented is not specified, the overhead for the MAC CE may inhibit increase of communication throughput.

The present inventors therefore have conceived a requirement that allows simultaneous update to be appropriately implemented while satisfying the restriction regarding the configuration of the TRS of the Rel. 15.

According to one aspect of the present disclosure, a TCI state can be collectively instructed for a plurality of spatially QCL CCs (for example, multiple CCs applying the same analog beam at the same frequency band) by using one MAC CE.

Hereinafter, embodiments according to the present disclosure will be described in detail with reference to the drawings. A radio communication method according to each embodiment may be applied independently, or may be applied in combination with others.

Note that, in the present disclosure, a panel, an uplink (UL) transmission entity, a TRP, a demodulation reference signal (DMRS) port, a DMRS port group, a code division multiplexing (CDM) group, a predetermined reference signal related group, control resource set (CORESET) group, CORESET, PDSCH, a codeword, a base station, and the like may be replaced with each other. Further, the panel identifier (ID) and the panel may be replaced with each other. The TRP ID and the TRP may be replaced with each other.

Note that while in the following, an example will be described where the TCI state is controlled in units of groups each including a plurality of CCs, the present disclosure is not limited thereto. In other words, the "CC" in the present disclosure may be read as "at least one of the CC, the BWP, the CORESET and a panel" or may be read as "at least one index of the CC, the BWP, the CORESET and the panel". The index and the ID may be read as each other. The "CC" in the present disclosure may mean a cell or a serving cell.

The "group" in the present disclosure may be replaced with grouping, a sequence, a list, a set, and the like.

### (Radio communication method)

### <First Embodiment>

The first embodiment uses the following requirements as the requirements for the simultaneous update described above (note that it may be necessary to satisfy all the requirements, or one or more requirements may be omitted (does not have to be satisfied)):
- The Rel. 15 MAC CE is reused to activate the same set of TCI state IDs for all active BWPs in the same band or in the same cell group.
- Support for this mode (this simultaneous update processing) may be instructed by the UE capability.
- The UE configured to operate in this mode by higher layer signaling may perform simultaneous update of the TCI state. It may be assumed that the UE for which this mode is configured simultaneously updates the TCI states of all the active BWPs in each band or each cell group. Further, when this mode is configured, the UE may assume that a combination of bands or cell groups to which simultaneous update of the TCI state is to be applied is configured and may simultaneously update the TCI state of the configured band or cell group.
- In order to operate in this mode, the UE expects that the RSs of the QCL type D configured for the same TCI state ID for all active BWPs in each band or each cell group have a QCL type D relationship, if applicable.
- For an activation MAC CE received in a certain active BWP in a certain band or cell group, the instructed activated TCI state ID is applied to all active BWPs in this band or cell group.

Differences from the above requirement are as follows:
- The simultaneous update can be applied even in the FR (for example, FR1) other than FR2.
- For all BWPs/CCs, the RSs configured in the QCL-D RS for the same TCI state ID may be different, but need to have a QCL-D relation with each other (for example, in a case of the configuration as illustrated in Fig. 2, the RS of the QCL type D of each CC is the TRS of each CC, and thus is different, but all the TRSs of each CC are in the relation between the SSB of the CC #0 and the QCL-D and satisfy this requirement).
- Even if no RS of the QCL type D is configured in the TCI state of the PDSCH, simultaneous update can be applied. Note that the above "if applicable" may be read as "if the RS of the QCL type D is configured in the TCI state of the PDSCH".

In this case, the simultaneous update of the TCI state can be implemented while satisfying the restriction regarding the configuration of the TRS in Rel. 15 as illustrated in Fig. 2.

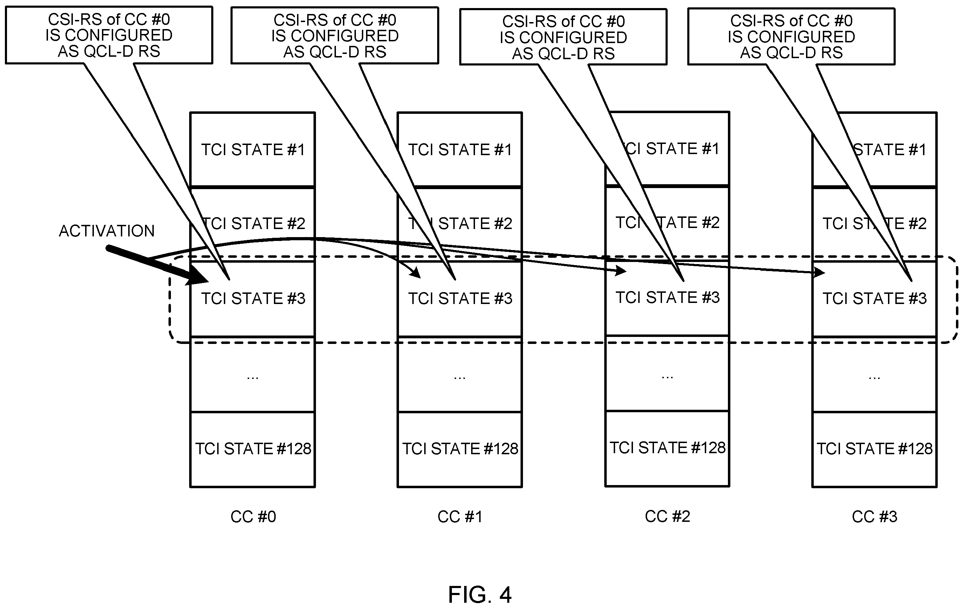

Fig. 4 is a diagram illustrating an example of an assumption of UE in a case where simultaneous update is applied even if the TRS is configured as the RS of the QCL type D in the TCI state of the PDSCH. Fig. 4 illustrates an example that is the same as Fig. 1 except for the RS of the QCL type D in the TCI state of the PDSCH, and thus, overlapping description will not be repeated.

In this example, as illustrated in Fig. 2, for the TCI state of each PDSCH, the RS of the QCL type D is configured to be the same as the RS of the QCL type A. For example, the UE assumes that the CSI-RS of the CC #i is configured as the RS of the QCL type A and the RS of the type D for the TCI state #3 of the CC #i (i = 0-3).

Further, in the present example, as illustrated in Fig. 2, the RSs of the QCL-D configured for the same TCI state of each CC have a relation of the QCL-D with each other (all are SSB and QCL-D for the CC #0).

In Fig. 4, as in Fig. 1, even if RSs of the QCL-D configured for the same TCI state ID are not exactly the same for all CCs, simultaneous update can be applied. In this case, RSs of the QCL-D configured for the same TCI state ID are allowed to be different for each CC.

According to the first embodiment described above, only by updating the TCI state of one CC, the same effect as that obtained by updating the TCI states of other CCs of the same group is obtained, so that it is possible to effectively reduce communication overhead related to updating of the TCI state.

### <Second Embodiment>

While the description of the first embodiment described above relates to a TCI state (which may be referred to as a DL TCI state) to be applied to a downlink channel/signal such as a PDCCH, a PDSCH, and the like, the description of the embodiment may be read as at least one of a spatial relation (SRI) to be applied to an uplink channel/signal such as a PUCCH, a PUSCH, an SRS, a UL TCI state (a UL TCI state will be described later), and the like.

For example, the UE may configure (indicate) the group of CCs associated with at least one of the SRI and the UL TCI states using higher layer signaling (for example, RRC signaling, MAC CE, and the like).

For example, when the UE receives a PUCCH spatial relation activation/deactivation MAC CE for a CC of a certain band, the spatial relation activated by the MAC CE may be assumed for the PUCCH of another CC of the band.

Note that the UL TCI state may correspond to a notification of the UL beam similarly to a notification of the DL beam (DL TCI state) of the UE. By control based on the UL TCI state, it is expected that the UE suitably performs simultaneous UL transmission using a plurality of panels.

For UL transmission, when an associated panel ID is specified (for example, specified by DCI), the UE may perform the UL transmission using a panel corresponding to the panel ID. The panel ID may be associated with the UL TCI state, and when the UL TCI state is specified (or activated) for a predetermined UL channel/signal, the UE may specify the panel used for the UL channel/signal transmission in accordance with the panel ID associated with the UL TCI state.

A channel/signal (which may be referred to as a target RS) for which the UL TCI state is configured (specified) may be, for example, at least one of a PUSCH (DMRS of the PUSCH), a PUCCH (DMRS of the PUCCH), a random access channel (Physical Random Access Channel (PRACH)), an SRS, and the like.

Furthermore, an RS (source RS) having a QCL relation with the channel/signal may be, for example, a DL RS (for example, SSB, CSI-RS, TRS, and the like) or a UL RS (for example, SRS, SRS for beam management, and the like).

In the UL TCI state, the RS having the QCL relation with the channel/signal may be associated with a panel ID for receiving or transmitting the RS. The association may be explicitly configured (or specified) by higher layer signaling (for example, RRC signaling, MAC CE, and the like), or implicitly determined.

A correspondence relationship between the RS and the panel ID may be configured by being included in UL TCI state information, or may be configured by being included in at least one of resource configuration information, spatial relation information, and the like of the RS.

A QCL type indicated by the UL TCI state may be the existing QCL type A-D, or may be another QCL type, or may include a predetermined spatial relation, an associated antenna port (port index), or the like.

According to the second embodiment described above, only by updating the spatial relation/UL-TCI state of one CC, the same effect as that obtained by updating the spatial relations/UL-TCI states of other CCs of the same group is obtained, so that it is possible to effectively reduce communication overhead related to updating of the TCI state.

### <Others>

While each of the above-described embodiments has been described assuming the TCI state of the PDSCH, the present disclosure is not limited thereto. For example, the PDSCH may be read as the PDCCH. In other words, each embodiment of the present disclosure may be applied to simultaneous update of the TCI state of the PDCCH.

Note that the UE may report UE capability information (UE capability) including information regarding at least one of the following to the network:
- whether or not to support a TCI state (or TCI state signaling) for a group of CCs;
- a maximum number of CCs for the group (grouping) to be supported,
- a maximum number of BWPs for the group (grouping) to be supported,
- a maximum number of the groups (grouping) to be supported,
- the number of RS resources configured in all the TCI states for each of the groups;
- the number of RS resources configured in all TCI states of all the groups.

The network may notify the UE that has reported that it supports the UE capability of information for activating grouping of CCs related to the TCI state, and the like.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

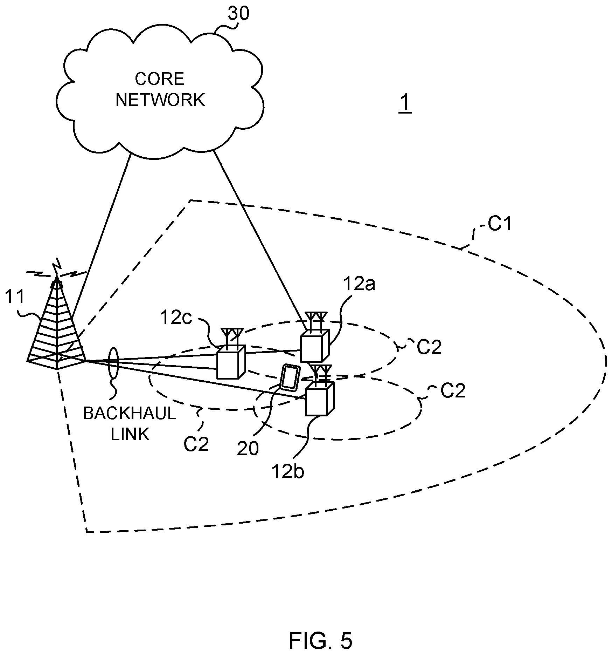

Fig. 5 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNBs) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 when the base stations 11 and 12 are not distinguished.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and for example, FR1 may be a frequency range higher than FR2.

Further, the user terminal 20 may perform communication on each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method and another multi-carrier transmission method) may be used as UL and DL radio access methods.

In the radio communication system 1, as a downlink channel, a downlink shared channel (a physical downlink shared channel (PDSCH)) shared by each user terminal 20, a broadcast channel (a physical broadcast channel (PBCH)), a downlink control channel (a physical downlink control channel (PDCCH)), or the like may be used.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB) and the like are transmitted by the PDSCH. The PUSCH may transmit user data, higher layer control information, and the like. Further, the PBCH may transmit a master information block (MIB).

Lower layer control information may be transmitted by PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, and the like, and the DCI for scheduling the PUSCH may be referred to as UL grant, UL DCI, and the like. Note that PDSCH may be replaced with DL data, and PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be interchangeable.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), or the like may be transmitted on the PUCCH. A random access preamble for establishing a connection with a cell may be transmitted on PRACH.

Note that in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be at least one of, for example, a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

In the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)."

### (Base Station)

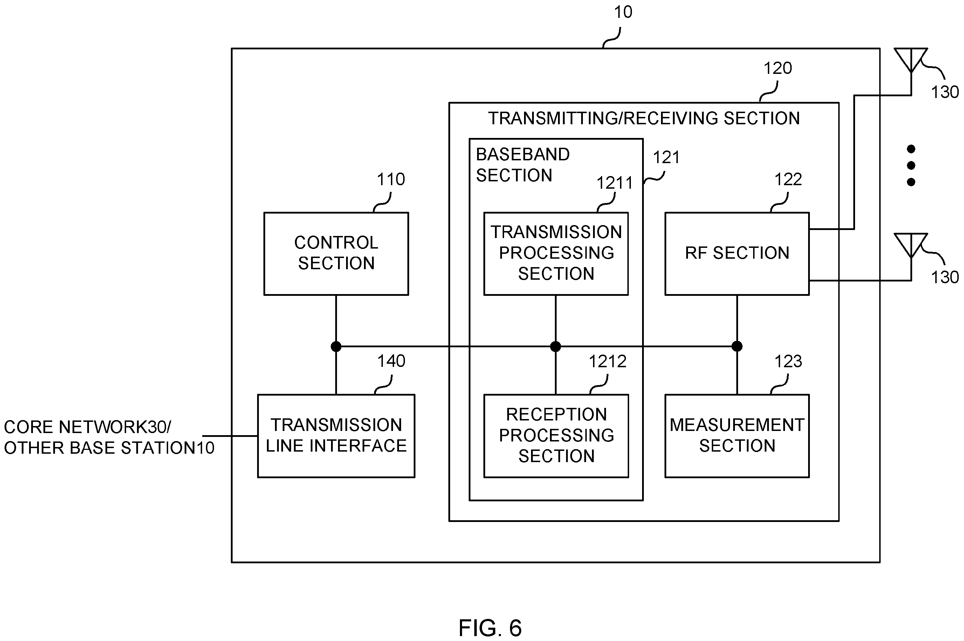

Fig. 6 illustrates one example of the configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be provided.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can include a controller, a control circuit, or the like, which is described on the basis of common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be forwarded as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be implemented by a transmitter/receiver, an RF circuit, a baseband circuit, a filter, a phase shifter, a measurement circuit, a transmission/reception circuit, and the like, which are described on the basis of common recognition in the technical field related to the present disclosure.

The transmitting/receiving section 120 may be configured as an integrated transmitting/receiving section, or may include a transmission section and a receiving section. The transmission section may be configured by the transmission processing section 1211 and the RF section 122. The receiving section may include the reception processing section 1212, the RF section 122, and the measurement section 123.

The transmission/reception antenna 130 can be implemented by an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency range, filtering processing, amplification, and the like on the base band signal, to transmit a signal in the radio frequency range via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the receiving section of the base station 10 in the present disclosure may include at least one of the transmitting/receiving section 120, the transmission/reception antenna 130, and the transmission line interface 140.

Note that the transmitting/receiving section 120 may transmit, to the user terminal 20, one medium access control control element (MAC CE) (activation MAC CE) to be used for updating a transmission configuration indication state (TCI state) for all active bandwidth parts (BWPs) in the same band or the same cell group.

### (User Terminal)

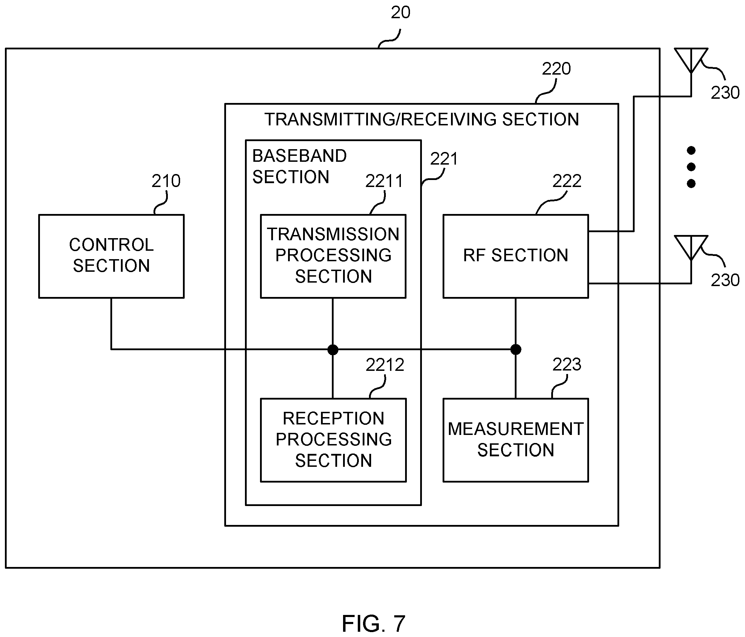

Fig. 7 illustrates one example of the configuration of a user terminal according to one embodiment. The user terminal 20 includes a control section 210, a transmitting/receiving section 220, and a transmission/reception antenna 230. Note that one or more each of the control sections 210, the transmitting/receiving sections 220, and the transmission/reception antennas 230 may be included.

Note that this example mainly describes functional blocks of characteristic parts of the present embodiment, and it may be assumed that the user terminal 20 also includes other functional blocks necessary for radio communication. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmission section and a receiving section. The transmission section may be configured by the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), or the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. In a case where transform precoding is enabled for a channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the receiving section of the user terminal 20 in the present disclosure may include at least one of the transmitting/receiving section 220 and the transmission/reception antenna 230.

Note that the transmitting/receiving section 220 may receive one medium access control control element (MAC CE) (activation MAC CE).

The control section 210 may update a transmission configuration indication state (TCI state) for all active bandwidth parts (BWPs) in a same band or a same cell group by the one MAC CE.

The control section 210 may expect that reference signals of a quasi-co-location (QCL) type D configured for a same TCI state identifier (ID) of all active BWPs within each band or each cell group have a QCL type D relationship with each other, if applicable.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) and using these apparatuses. The functional block may be implemented by combining the above-described single apparatus or the above-described plurality of apparatuses with software.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that causes transmission to function may be referred to as a transmitting unit, a transmitter, and the like. In any case, as described above, the implementation method is not particularly limited.

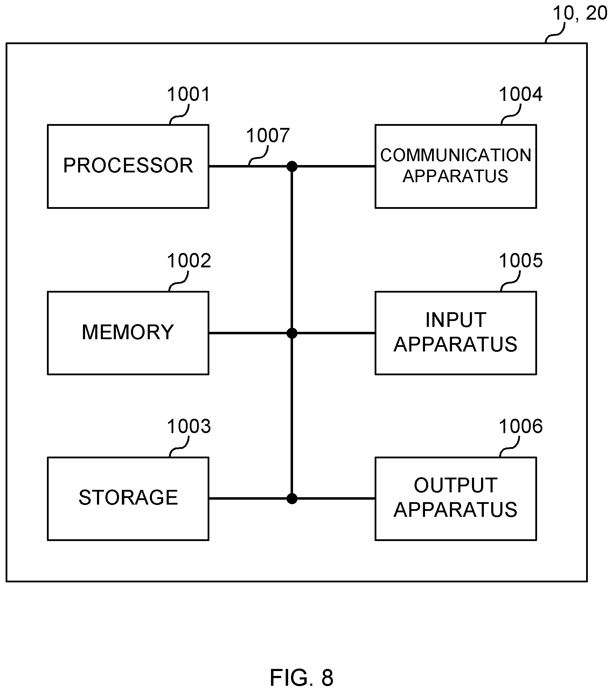

For example, the base station, the user terminal, and the like in one embodiment of the present disclosure may function as a computer that performs the processing of the radio communication method of the present disclosure. Fig. 8 illustrates one example of the hardware configuration of the base station and the user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit can be replaced with each other. The base station 10 and the user terminal 20 may have hardware configuration including one or a plurality of apparatuses illustrated in the figure, or may be configured without including some apparatuses.

For example, although only one processor 1001 is illustrated, a plurality of processors may be provided. Further, the processing may be executed by one processor, or the processing may be executed in sequence or using other different methods by two or more processors. Note that the processor 1001 may be implemented with one or more chips.

For example, each of functions of the base station 10 and the user terminal 20 is implemented by causing the processor 1001 to perform operation by predetermined software (program) to be read on hardware such as the processor 1001 and the memory 1002, and then controlling communication via the communication apparatus 1004 and controlling at least one of reading and writing of data in the memory 1002 and the storage 1003.

The processor 1001 controls the entire computer by, for example, operating an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads a program (program code), a software module, data, and the like from at least one of the storage 1003 and the communication apparatus 1004 to the memory 1002, and executes various pieces of processing in accordance therewith. As the program, a program to cause a computer to execute at least a part of the operation described in the above-described embodiment is used. For example, the control section 110 (210) may be implemented by a control program that is stored in the memory 1002 and operates in the processor 1001, and other functional blocks may be implemented similarly.

The memory 1002 is a computer-readable recording medium, and may include at least one of, for example, a read only memory (ROM), an erasable programmable ROM (EPROM), an electrically EPROM (EEPROM), a random access memory (RAM) and other appropriate storage media. The memory 1002 may be referred to as a register, a cache, a main memory (primary storage apparatus), and the like. The memory 1002 can store a program (program code) executable for implementing the radio communication method according to one embodiment of the present disclosure, a software module, and the like.

The storage 1003 is a computer-readable recording medium, and may include at least one of, for example, a flexible disk, a floppy (registered trademark) disk, a magneto-optical disk (e.g., compact disc (e.g., compact disc ROM (CD-ROM)), digital versatile disc, and Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by a transmitting unit 120a (220a) and a receiving unit 120b (220b).

The input apparatus 1005 is an input device for receiving input from the outside (e.g., keyboard, mouse, microphone, switch, button, and sensor). The output apparatus 1006 is an output device that performs output to the outside (for example, a display, a speaker, a light emitting diode (LED) lamp, and the like). Note that the input apparatus 1005 and the output apparatus 1006 may be provided in an integrated configuration (e.g., touch panel).

The apparatuses such as the processor 1001 and the memory 1002 are connected by the bus 1007 for communicating information. The bus 1007 may include a single bus, or include buses different for each apparatus.

The base station 10 and the user terminal 20 may include hardware such as a microprocessor, a digital signal processor (DSP), an application specific integrated circuit (ASIC), a programmable logic device (PLD), and a field programmable gate array (FPGA), and some or all of the functional blocks may be implemented by the hardware. For example, the processor 1001 may be implemented by using at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. The component carrier (CC) may be referred to as a cell, a frequency carrier, a carrier frequency, and the like.

A radio frame may include one or a plurality of periods (frames) in a time domain. Each of the one or plurality of periods (frames) included in the radio frame may be referred to as a subframe. Further, the subframe may include one or a plurality of slots in the time domain. The subframe may be a fixed time length (e.g., 1 ms) that does not depend on numerology.

Here, the numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and specific windowing processing performed by the transceiver in a time domain.

The slot may include one or a plurality of symbols in the time domain (e.g., orthogonal frequency division multiplexing (OFDM) symbol and single carrier frequency division multiple access (SC-FDMA) symbols). The slot may be a time unit based on the numerology.

The slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted by using a mini slot may be referred to as a PDSCH (PUSCH) mapping type B.

All of a radio frame, a subframe, a slot, a mini slot, and a symbol represent a time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be interchangeable.

For example, one subframe may be referred to as a TTI. A plurality of sequential subframes may be referred to as a TTI. One slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that a unit to represent the TTI may be referred to as a slot, a mini slot, and the like, instead of a subframe.

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of a TTI is not limited thereto.

The TTI may be a transmission time unit of a channel-encoded data packet (transport block), a code block, a codeword, and the like, or may be a processing unit of scheduling, link adaptation, and the like. Note that, when a TTI is given, a time interval (e.g., symbol number) to which the transport block, the code block, the codeword, and the like are actually mapped may be shorter than the TTI.

Note that, when one slot or one mini slot is referred to as a TTI, one or more TTIs (i.e., one or more slots or one or more mini slots) may be the minimum time unit of scheduling. The number of slots (the number of mini slots) constituting the minimum time unit of scheduling may be controlled.

A TTI having a time length of 1 ms may be referred to as a usual TTI (TTI in 3GPP Rel. 8-12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub slot, a slot, and the like.

Note that the long TTI (e.g., usual TTI and subframe) may be replaced with a TTI having a time length exceeding 1 ms, and a short TTI (e.g., shortened TTI) may be replaced with a TTI having a TTI length less than the TTI length of the long TTI and not less than 1 ms.

A resource block (RB) is a resource allocation unit in a time domain and a frequency domain, and may include one or a plurality of sequential subcarriers in the frequency domain. The number of subcarriers included in the RB may be the same regardless of the numerology, and may be twelve, for example. The number of subcarriers included in the RB may be determined based on the numerology.

The RB may include one or a plurality of symbols in the time domain, and may have a length of one slot, one mini slot, one subframe, or one TTI. Each of one TTI, one subframe, and the like may include one or a plurality of resource blocks.

Note that one or a plurality of RBs may be referred to as physical resource blocks (physical RBs (PRBs)), a sub-carrier group (SCG), a resource element group (REG), a PRB pair, an RB pair, or the like.

The resource block may include one or a plurality of resource elements (REs). For example, one RE may be a radio resource field of one subcarrier and one symbol.

A bandwidth part (BWP) (which may be referred to as partial bandwidth or the like) may represent a subset of sequential common resource blocks (RBs) for a certain numerology in a certain carrier. Here, the common RB may be specified by the index of the RB based on a common reference point of the carrier. The PRB may be defined by a certain BWP, and numbered in the BWP.

The BWP may include a BWP for UL (UL BWP) and a BWP for DL (DL BWP). One or a plurality of BWPs may be configured for UE in one carrier.

At least one of the configured BWPs may be active. The UE is not required to transmit/receive a predetermined signal/channel outside the active BWP. Note that the "cell", the "carrier", and the like in the present disclosure may be replaced with the "BWP".

Note that the structures of the above-described radio frame, subframe, slot, mini slot, symbol, and the like are merely examples. For example, the configurations of the number of subframes included in a radio frame, the number of slots per subframe or radio frame, the number of mini slots included in a slot, the number of symbols and RBs included in a slot or a mini slot, the number of subcarriers included in an RB, the symbol number in a TTI, the symbol length, the cyclic prefix (CP) length, and the like can be variously changed.

The information, parameters, and the like described in the present disclosure may be represented by using absolute values, relative values from predetermined values, or other corresponding information. For example, radio resources may be indicated by a predetermined index.

The names used for parameters and the like in the present disclosure are in no respect limiting. Further, any mathematical expression or the like that uses these parameters may differ from those explicitly disclosed in the present disclosure. Since various channels (e.g., PUCCH and PDCCH) and information elements can be identified by any suitable names, various names assigned to these various channels and information elements are in no respect limiting.

The information, signals, and the like described in the present disclosure may be represented by using any of various different technologies. For example, data, instructions, commands, information, signals, bits, symbols and chips which can be referenced throughout the above entire description may be represented by voltages, currents, electromagnetic waves, magnetic fields, magnetic particles, optical fields, photons, or any combination thereof.

The information, signals, and the like can be output in at least one of a direction from a higher layer to a lower layer and a direction from a lower layer to a higher layer. The information, signals, and the like may be input/output via a plurality of network nodes.

The information, signals, and the like that have been input/output may be stored in a specific location (e.g., memory), or may be managed by using a management table. The information, signal, and the like to be input and output can be overwritten, updated or appended. The output information, signal, and the like may be deleted. The information, signals, and the like that have been input/output may be transmitted to another apparatus.

Notification of information may be performed not only in the aspects/embodiments described in the present disclosure but by using another method. For example, notification of information in the present disclosure may be performed by using physical layer signaling (e.g., downlink control information (DCI) and uplink control information (UCI)), higher layer signaling (e.g., radio resource control (RRC) signaling, broadcast information (e.g., master information block (MIB), and system information block (SIB)), medium access control (MAC) signaling), another signal, or a combination thereof.

Note that the physical layer signaling may be referred to as layer 1/layer 2 (L1/L2) control information (L1/L2 control signal), L1 control information (L1 control signal), or the like. Further, the RRC signaling may be referred to as an RRC message, and may be, for example, an RRC connection setup message, an RRC connection reconfiguration message, and the like. Notification of the MAC signaling may be performed by using, for example, a MAC control element (MAC control element (CE)).

Notification of predetermined information (e.g., notification of "being X") may be performed not only explicitly but also by implicitly (e.g., by not performing notification of predetermined information or performing other information).

Judging may be performed by a value (0 or 1) represented by one bit, a Boolean value represented by true or false, or comparison of numerical values (e.g., comparison with predetermined value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, instructions, information, and the like may be transmitted/received via a transmission medium. For example, when the software is transmitted from a website, a server, or another remote source by using at least one of wired technology (e.g., coaxial cable, optical fiber cable, twisted pair, and digital subscriber line (DSL)) and wireless technology (e.g., infrared rays and microwaves), at least one of the wired technology and the wireless technology is included in the definition of the transmission medium.

The terms "system" and "network" used in the present disclosure can be used interchangeably. The "network" may mean an apparatus (e.g., base station) included in the network.

In the present disclosure, the terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "layer number", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be interchangeably used. The base station may be referred to by a term such as a macro cell, a small cell, a femto cell, and a pico cell.

The base station can accommodate one or a plurality of (e.g., three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that perform communication service in the coverage.

In the present disclosure, the terms such as "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, and a client, or by another appropriate term.

At least one of the base station and the mobile station may be referred to as a transmission apparatus, a reception apparatus, a radio communication apparatus, and the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with a base station. In the case, the base station 10 may have the function of the above-described user terminal 20

In the present disclosure, the operation performed by a base station may be performed by an upper node thereof in some cases. In a network including one or a plurality of network nodes having a base station, it is clear that various operations performed for communication with a terminal can be performed by a base station, one or more network nodes other than the base station (e.g., mobility management entity (MME) and serving-gateway (S-GW) can be considered, but are not limiting), or a combination thereof.

Each aspect/embodiment described in the present disclosure may be used independently, in combination, or by being switched along with execution. Further, the order of processing procedures, sequences, flowcharts, and the like of the aspects/embodiments described in the present disclosure may be re-ordered as long as there is no inconsistency. For example, various step elements in the methods described in the present disclosure are presented by using illustrative orders, and the methods are not limited to the presented specific orders.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new-radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate radio communication methods, a next generation system expanded based thereon, and the like. A plurality of systems may be combined (e.g., combination of LTE or LTE-A and 5G) and applied.

The phrase "based on" used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. Thus, reference to the first and second elements does not mean that only two elements can be adopted or that the first element must precede the second element in some way.

The term "deciding (determining)" used in the present disclosure may include a wide variety of operations. For example, "deciding (determining)" may be regarded as "deciding (determining)" judging, calculating, computing, processing, deriving, investigating, looking up, search, inquiry (e.g., looking up in table, database, or another data structure), ascertaining, and the like.

"Deciding (determining)" may be regarded as "deciding (determining)" receiving (e.g., receiving information), transmitting (e.g., transmitting information), input, output, accessing (e.g., accessing data in memory), and the like.

"Deciding (determining)" may be regarded as "deciding (determining)" resolving, selecting, choosing, establishing, comparing, and the like. That is, "deciding (determining)" may be regarded as "deciding (determining)" some operation.

"Deciding (determining)" may be replaced with "assuming", "expecting", "considering", and the like.

The terms "connected" and "coupled", or any variation thereof used in the present disclosure may mean that two or more elements are directly or indirectly connected or coupled, and can include the existence of one or more intermediate elements between two elements "connected" or "coupled" with each other. The coupling or connection between the elements may be physical, logical or a combination of these. For example, "connection" may be replaced with "access".

In the present disclosure, when two elements are connected, it can be considered that the two elements are "connected" or "coupled" with each other by using one or more electrical wires, cables, printed electrical connection, and the like and using, as some non-limiting and non-inclusive examples, electromagnetic energy having a wavelength in a radio frequency domain, a microwave domain, and a (both visible and invisible) light domain, and the like.

In the present disclosure, the phrase "A and B are different" may mean that "A and B are different from each other". Note that the description may mean that "A and B are different from C". The terms such as "leave", "coupled", and the like may be interpreted similarly to "different".

When the terms such as "include", "including", and variations thereof are used in the present disclosure, these terms are intended to be inclusive similarly to the term "comprising". The term "or" used in the present disclosure is intended not to be exclusive-OR.

In the present disclosure, for example, when an article in English, such as a, an, and the, is added in translation, the present disclosure may include that the noun that follows these articles is in the plural form.

Although the invention according to the present disclosure has been described in detail above, it is obvious to a person skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a receiving section configured to receive one medium access control control element (MAC CE); and
a control section configured to update a transmission configuration indication state (TCI state) for all active bandwidth parts (BWPs) in a same band or a same cell group by the one MAC CE,
wherein the control section expects that reference signals of a quasi-co-location (QCL) type D configured for a same TCI state identifier (ID) of all active BWPs within each band or each cell group have a QCL type D relationship with each other, if applicable.

2. A radio communication method of a terminal comprising:
a step of receiving one medium access control control element (MAC CE); and
a step of updating a transmission configuration indication state (TCI state) for all active bandwidth parts (BWPs) in a same band or a same cell group by the one MAC CE,
wherein in the step of updating, it is expected that reference signals of a quasi-co-location (QCL) type D configured for a same TCI state identifier (ID) of all active BWPs within each band or each cell group have a QCL type D relationship with each other, if applicable.
